**Europäisches Patentamt**

**European Patent Office**

**Office européen des brevets**

(19)

(11) Veröffentlichungsnummer : **0 076 457**
**B1**

(12) **EUROPÄISCHE PATENTSCHRIFT**

(45) Veröffentlichungstag der Patentschrift :
**10.09.86**

(21) Anmeldenummer : **82108985.1**

(22) Anmeldetag : **29.09.82**

(51) Int. Cl.⁴ : **B 01 J 20/34, C 01 B 31/08**

(54) **Verfahren zur Regeneration von feuchten, pulverförmigen Adsorptionsmitteln sowie Vorrichtung zur Durchführung des Verfahrens.**

(30) Priorität : **01.10.81 DE 3139078**

(43) Veröffentlichungstag der Anmeldung :
**13.04.83 Patentblatt 83/15**

(45) Bekanntmachung des Hinweises auf die Patenterteilung : **10.09.86 Patentblatt 86/37**

(84) Benannte Vertragsstaaten :
**AT BE CH FR IT LI NL SE**

(56) Entgegenhaltungen :
**FR-A- 2 261 976**
**GB-A- 679 095**
**GB-A- 704 810**
**GB-A- 731 923**
**US-A- 2 933 454**
**US-A- 3 904 549**
**US-A- 4 131 565**
**US-A- 4 248 706**
**CHEMICAL ENGINEERING PROGRESS, Band 69, Nr. 11, November 1973, Seiten 56-62, New York, USA, A.W. LOVEN: "Perspectives on carbon regeneration"**

(73) Patentinhaber : **Bergwerksverband GmbH**
**Franz-Fischer-Weg 61**
**D-4300 Essen 13 (DE)**

(72) Erfinder : **Klein, Jürgen, Dr.**
**Hülscher Feld 32**
**D-4300 Essen 14 (DE)**
Erfinder : **Schulz, Peter**
**Friedrichswall 19**
**D-4300 Essen (DE)**
Erfinder : **Kelch, Diethelm**
**Hombergerstrasse 56**
**D-4030 Ratingen (DE)**

## Beschreibung

Die Erfindung betrifft ein Verfahren zur Regeneration von feuchten, pulverförmigen Adsorptionsmitteln, wobei das feuchte, beladene Adsorptionsmittel in den unteren Bereich einer mit einem Auflockerungs/Wärmeträger-Schüttgut (Schüttgut) versehenen Wirbelschicht eingespeist, unter gleichzeitiger Trocknung durch das Schüttgut hindurch nach oben gefördert (Trocknungsstufe) und gemeinsam mit dem Wirbelgas von oberhalb der Wirbelschicht abgeführt und in einem nachgeschalteten Feststoffabscheider vom Wirbelgas gestrennt wird. Die Erfindung betrifft weiterhin eine Vorrichtung zur Durchführung dieses Verfahrens.

Pulverförmige Adsorptionsmittel haben Partikelgrößen von im wesentlichen weniger als 1 mm Durchmesser, meistens jedoch von weniger als 100 $\mu$m Durchmesser ; hierbei handelt es sich in erster Linie um Aktivkohlen, aber auch andere gebräuchliche Adsorptionsmittel. Derartige Adsorptionsmittel finden z. B. in Kläranlagen und dort bevorzugt in sogenannten Belebtschlamm-Becken Anwendung, um die dort ablaufenden chemischen Prozesse zu fördern ; sie finden aber auch in Adsorptionsprozessen in ausschließlich flüssiger Phase Anwendung. Die vorgenannten Adsorptionsmittel können auch gegebenenfalls katalytische Wirkung haben. In jedem Falle sind derart feinkörnige Adsorptionsmittel relativ kostspielig, so daß man bestrebt ist, sie zu regenerieren, um sie erneut einsetzen zu können.

Aus Chem. Engin. Prog., 69, Nr. 11 (1973) Seiten 56-62 ist bereits ein Verfahren zur Regeneration von feuchten, pulverförmigen Adsorptionsmitteln in einen Wirbelschichtofen der eingangs genannten Gattung bekannt, bei dem feuchte, pulverförmige Aktivkohle in einem Wirbelschichtofen mit Schüttgut (Sand) als Wärmeträger und Lockerungsmittel getrocknet und regeneriert wird. Bei diesem einstufig betriebenen Verfahren müssen hinsichtlich der Ausgestaltung der Vorrichtung als auch hinsichtlich der Betriebsweise Kompromisse getroffen werden, damit sowohl der Trocknungsvorgang als auch der Regenerationsvorgang gewährleistet wird. Es ist nicht zu vermeiden, daß insbesondere hinsichtlich des Energieaufwandes ein vergleichsweise hoher Aufwand getrieben werden muß. Außerdem läßt sich das Verfahren und die zur Durchführung des Verfahrens benötigte Vorrichtung nicht so betreiben bzw. ausbilden, daß sowohl der Trocknungsvorgang als auch der Regenerationsvorgang für sich optimiert werden können.

Es ist demnach die Aufgabe der Erfindung, das Verfahren der eingangs genannten Art dahingehend weiterzubilden, daß es bei möglichst geringem Energieaufwand eine optimale Trocknung und Regeneration des Adsorptionsmittels gewährleistet ; insbesondere soll dies an mit Schlämmen aus Kläranlagen vermischten Aktivkohlen erreicht werden. Im übrigen ist eine Vorrichtung zum Durchführen des genannten Verfahrens zu realisieren.

Die Aufgabe wird, in bezug auf Verfahren, mit den kennzeichnenden Merkmalen des Anspruches 1 und, in bezug auf eine Vorrichtung, mit den kennzeichnenden Merkmalen des Anspruches 8 gelöst. Weiterbildungen der Erfindung ergeben sich aus den abhängigen Ansprüchen 2-7 und 9-12.

Als gebräuchlichster Regenerationsschritt wird eine Reaktivierung in Frage kommen, bei der — wie auch bei anderen Regenerationsverfahren — die jeweils üblichen Betriebsbedingungen gewählt werden können. Als Auflockerungs/ Wärmeträger-Schüttgut kommen z. B. Sand, Asche oder ähnliche, vor allem inerte Materialien in Frage. Das in den beiden Behandlungsstufen — der Trocknungs- und der Regenerationsstufe — verwendete Wirbelgas wird in der Regel frei von Oxidationsmitteln sein und muß in seiner Temperatur und Zusammensetzung den Erfordernissen der Trocknung und Regeneration in an sich bekannter Weise entsprechen.

Überraschenderweise wurde festgestellt, daß durch das erfindungsgemäße Verfahren annähernd die gleiche Aktivität des Adsorptionsmittels bei im Vergleich zu einstufigen Verfahren vermindertem Energiebedarf erzielt wird.

Durch das erfindungsgemäße Verfahren wurde es auch ermöglicht, entsprechend den Merkmalen von Patentanspruch 2, die in Behandlungsstufen abgeführten Wirbelgase zumindest teilweise den frischen Wirbelgasen zuzumischen. Dies ist vor allem deshalb möglich, weil in der Trocknungsstufe niedrigere Temperaturen des Wirbelgases als in der Regenerationsstufe benötigt werden.

Vor allem, wenn das feuchte, beladene Adsorptionsmittel mit einem Schlamm vermischt ist, wie man ihn z. B. in sogenannten Belebtschlamm-Becken von Kläranlagen antrifft, ist es gemäß Patentansprüchen 3 und 4 von Vorteil, das Adsorptionsmittel gemeinsam mit dem Schlamm zu trocknen. Bei relativ inerten Schlämmen empfiehlt es sich, erfindungsgemäß vor dem Eintritt in die Regenerationsstufe die getrocknete Schlammasse von dem getrockneten Adsorptionsmittel durch an sich bekannte Verfahren, wie Windsichten oder ähnliches, zu trennen ; dies ist vor allem dann leicht möglich, wenn die getrockneten Schlammpartikel in der Regel größer als 1 mm sind und sich dementsprechend deutlich in der Partikelgröße von den Adsorptionsmittel unterscheiden. Hierdurch wird eine relative Verkleinerung der Regenerationsstufe und eine Verminderung des Energieaufwandes erreicht. Soweit es sich um Schlämme handelt, deren Trockensubstanz vergast werden kann, empfiehlt es sich, erfindungsgemäß den gesamten Feststoff aus der Trocknungsstufe in die Regenerationsstufe zu überführen und den getrockneten Schlamm dort zumindest teilweise zu vergasen.

Hierdurch wird eine Abtrennung des Adsorptionsmittel vermieden. Es hat sich nämlich überraschenderweise herausgestellt, daß die vorerwähnte Vergasung oder Teilvergasung des getrockneten Schlammes die Aktivität des Adsorptionsmittels nur unwesentlich vermindert und die nicht vergasten Feststoffreste aus dem Schlamm in ihrer Partikelgröße im wesentlichen dem Adsorptionsmittel entspricht.

Darüber hinaus wurde gefunden, daß es besonders vorteilhaft ist, wenn erfindungsgemäß die von den Adsorptionsmitteln in der Regenerationsstufe frei werdenden Beladungssubstanzen dort zumindest teilweise vergast werden ; hierdurch wird ein ähnlicher Effekt wie bei der Vergasung von getrocknetem Schlamm erreicht. Die vorgenannte Maßnahme kann auch in Kombination mit der Schlammvergasung erfolgen.

Besonders erfolgreich läßt sich das erfindungsgemäße Verfahren bei der Verwendung von Aktivkohle als Adsorptionsmittel betreiben ; hierbei wird der Regenerationsschritt in erster Linie die an sich bekannte Aktivkohlereaktivierung sein.

Bei der Anwendung des erfindungsgemäßen Verfahrens mit pulverförmiger Aktivkohle, z. B. in den Belebtschlämmen von Klärwerken, hat es sich gezeigt, daß die erfindungsgemäße Regeneration nicht nur das Aktivkohlepulver wieder aktiv macht, sondern auch der nicht vergaste Anteil des Schlammes — also der sogenannten Biomasse — in aktiven Kohlenstoff umgewandelt wird, so daß bei einem einmaligen Kreislauf der Verlust an Aktivkohlestaub deutlich unter 10 Vol.-% bleibt. Durch solches Aktivkohlepulver wird die Leistung einer Kläranlage erhöht. Die Gewichtsverhältnisse zwischen Aktivkohle und Biomasse können z. B. im Bereich zwischen 1 : 1 bis 1 : 20 und darunter liegen. Durch Vorentwässerung werden vor dem Trocknungsschritt Feststoffanteile von in der Regel zwischen 5 und 35 % erreicht.

Als Auflockerungs/Wärmeträger-Schüttgut kommt unter anderem Sand in Frage. Ein solches Schüttgut hat eine mehr oder minder gleichmäßige Korngrößenverteilung, wobei die Auswahl der Korngrößen sich nach den für Wirbelschichten bekannten Kriterien richtet. Dabei ist bezüglich des mittleren Korndurchmessers und des Schüttgewichtes darauf zu achten, daß die diesen Eckwerten entsprechende Wirbelgasgeschwindigkeit so groß ist, daß das Wirbelgas auch in der Lage ist, den Schlamm beim Trocknen durch die Wirbelschicht hindurch nach oben zu führen und ihn möglichst auch noch pneumatisch aus dem Wirbelschichtofen auszutragen. Bevorzugt wird Quarzsand mit einer Körnung von 1-2 mm ; dabei werden umso bessere Ergebnisse erzielt, je enger das Kornspektrum ist, und es empfiehlt sich eine entsprechende Aussiebung vor der Verwendung. Darüber hinaus ist chemische Neutralität des Schüttgutes gegenüber dem zu trocknenden Material und der Wirbelgasatmosphäre erwünscht.

Das Schüttgut fördert eine disperse Verteilung des zu trocknenden Gutes und verhindert damit von vornherein das Auftreten von unerwünschten Agglomerationen. Erfindungsgemäß soll das feuchte, beladene Adsorptionsmittel im unteren Bereich der Wirbelschicht eingespeist werden, wobei vorzugsweise die Einspeisestellen etwas höher als die Einführstelle für das Wirbelgas (Anströmboden) liegen, da sich herausgestellt hat, daß durch diese Maßnahme eine gleichmäßigere Schlammverteilung über die Querschnittfläche der Wirbelschicht erreicht wird. Die Förderung des Schlammes unter gleichzeitiger Trocknung durch das wirbelnde Auflockerungs/Wärmeträger-Schüttgut (Schüttgut) hindurch soll nicht zu schnell erfolgen, so daß ein gründlicher Wärmeübergang zwischen dem Wirbelgas und dem zu behandelnden Gut bzw. zwischen diesem und dem Schüttgut möglich ist, so daß der gewünschte Trocknungs- und Regenerationsgrad auch verwirklicht wird. Die Abführung des getrockneten bzw. regenerierten Gutes zusammen mit dem Wirbelgas von oberhalb der Wirbelschichten kann auf verschiedenste Weise erfolgen, wobei es bevorzugt wird, daß das abströmende Wirbelgas die fraglichen Partikel mitreißt. Dieser Gas/Feststoff-Massenstrom wird in einem nachgeschalteten Feststoffabscheider in Gas und Feststoff getrennt ; hierfür dient in der Regel ein an sich bekannter Zyklon.

Die Höhen, welche die Wirbelschichten erreichen, richten sich, unabhängig von der Größe der Anströmfläche, nach der maximal gewünschten Behandlungsintensität. Dabei kommen als Wirbelschichthöhen bei der Verwendung von Sand als Schüttgut z. B. 500 bis 800 mm in Frage.

Die Aufgabe des zu behandelnden Gutes erfolgt durch ein geeignetes Förderorgan, vorzugsweise aus einem Vorratsbunker heraus.

Die bereits erwähnte, zumindest teilweise, Zumischung von abgeführtem Wirbelgas zu den frischen Wirbelgasen wird man stets so wählen, daß die Wärmeverluste der die Wirbelschicht verlassenden Wirbelgase so weit wie möglich beschränkt bleiben. Die Temperaturen des in die Trocknungsstufe eintretenden Wirbelgases (Gemisch) wird in der Regel zwischen 500 und 800 °C liegen, während für die Regenerationsstufe Temperaturen zwischen etwa 800 und 1 200 °C benötigt werden. — Das zuzumischende Gas kann alternativ oder kummulativ an verschiedenen Stellen heißen, als Wirbelgas verwendeten Verbrennungsabgasen zugemischt werden ; so z. B. im Bereich der Brenner selbst, um dort eine ggf. notwendige Abgaskühlung zur Materialschonung zu erreichen. Die Zumischung kann aber auch direkt im Bereich der Wirbelschichtöfen erfolgen, vorzugsweise in einer bezüglich der Temperatur homogenisierend wirkenden Mischkammer. Darüber hinaus empfiehlt es sich, die zur Herstellung von Verbrennungsabgasen notwendige Verbrennungsluft vorzuheizen und dabei vorzugsweise einen Teil der fühlbaren Wärme der den Wirbelschichten abgeführten Wirbelgase verwenden.

Im Hinblick auf die erfindungsgemäße Vorrichtung zum Durchführen des in Rede stehenden Verfahrens empfiehlt es sich, für die Trocknungsstufe einen Wirbelschichtofen mit einem Längen- zu Breiten-Verhältnis von größer/gleich 4 zu verwenden. Dadurch wird eine besonders gute Ausnutzung der Anströmfläche bezüglich der Wärmeenergie und in bezug auf die Gutverteilung erreicht ; dabei war überraschend, daß durch Anwendung mehrerer verschiedener Aufgabestellen keine negative gegenseitige Beeinflussung festgestellt wurde.

Als besonders vorteilhaft haben sich, gemäß einer Weiterbildung der Erfindung, seitlich in die Wirbelschicht eingeführte Aufgabelanzen erwiesen. Diese sind vorzugsweise derart beschaffen, daß sie punktuelle Gutaufgabe vermeiden, was z. B. durch ein Rohr verwirklicht werden kann, welches in Strömungsrichtung des Wirbelgases durch eine starke Abschrägung eine vergrößerte Austrittsfläche an seinem Ende aufweist. Dadurch wird die Eintrittgeschwindigkeit des Gutes in die Wirbelschichtöfen vermindert und eine Flächenverteilung erreicht. Insbesondere werden auswechselbare Lanzen bevorzugt. Die Höhe der Aufgabestellen über den Anströmböden beträgt, gemäß einer Weiterbildung der Erfindung, etwa von 1 : 20 bis 1 : 50 der Wirbelschichthöhen. In den bereits oben beschriebenen Wirbelschichten würde eine Höhe von etwa 100 mm besonders günstig sein — höherliegende Aufgabestellen vermindern die Verweilzeit und die Behandlungsintensität des Gutes im Wirbelschichtofen, während geringere Höhen die Gefahr von Verbackungen und Verkrustungen des Anströmbodens entstehen lassen können ; im letzteren Fall würde die dispergierende Wirkung des Auflockerungs/Wärmeträger-Schüttgutes vermindert sein.

Es hat sich herausgestellt, daß im Gegensatz zu den nach dem Stand der Technik üblichen sich erfindungsgemäß ein als Rost ausgebildeter Anströmboden besonders empfiehlt. Die bisher verwendeten Systeme einer Gasumlenkung, z. B. durch Glocken oberhalb der Gasaustrittsstellen, sind insoweit nämlich von Nachteil, als sie den Durchtritt von im Wirbelgas noch vorhandenen Feststoffteilchen verhindern. Dies wird durch einen Rost, vorzugsweise einen Roststabboden, vermieden. Dadurch braucht die Abscheidung von Feststoffpartikeln aus den abgeführten Wirbelgasen nicht hundertprozentig zu sein, wenngleich es unerwünscht ist, zu hohe Feststoffbestandteile im Kreislauf durch die Anlage zu führen. Andererseits wurde aber überraschenderweise kein Durchfall von Wirbelgut durch den Anströmboden — vor allem, wenn es sich um einen Roststabboden handelt — beobachtet. Schließlich hat es sich als energie- und apparatemäßig besonders günstig erwiesen, wenn erfindungsgemäß eine Gasmischkammer unterhalb des Anströmbodens zumindest im Wirbelschichtofen für den Trocknungsschritt vorhanden ist, was nämlich zu einer temperaturmäßigen Homogenisierung des Wirbelgases führt und ein zusätzliches Apparateteil, nämlich eine gesonderte, dem Wirbelschichtofen vorgeschaltete Gasmischkammer, vermeidet ; außerdem kann aus dieser Gasmischkammer auch gleichzeitig das Wirbelgas für den weiteren Wirbelschichtofen (Regenerationsstufe) abgezweigt werden.

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

In der Zeichnung zeigen :

Figur 1  eine schematische Darstellung einer Anlage zur Durchführung des erfindungsgemäßen Verfahrens ;

Figur 2  eine erfindungsgemäße Aufgabelanze, zum Teil im Schnitt.

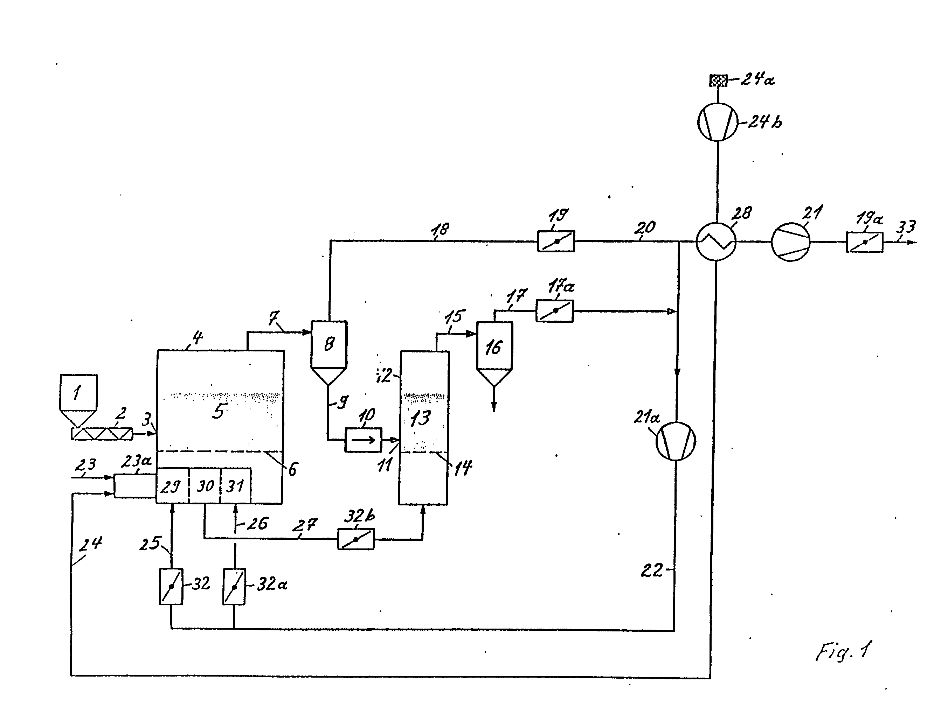

In Fig. 1  bezeichnet 1 einen Vorratsbunker für das beladene, feuchte Adsorptionsmittel, welches auch z. B. mit einem aus einer Kläranlage stammenden Klärschlamm vermischt sein kann. Über eine geeignete, an sich bekannte Dosiervorrichtung 2 wird über ein oder mehrere Aufgabestellen 3 dem Wirbelschichtofen 4 das zu behandelnde Gut aufgegeben. Dieser Wirbelschichtofen ist als im wesentlichen rechteckige Wirbelrinne mit einem Längen- zu Breiten-Verhältnis von mindestens 4 : 1 ausgeführt, in dem eine etwa 600-700 mm hohe Wirbelschicht 5, bestehend aus einem Auflockerungs/Wärmeträger-Schüttgut — hier Sand — betrieben wird. Hierin verteilt sich das zu behandelnde Gut, welches unter gleichzeitiger Trocknung durch das wirbelnde Schüttgut nach oben gefördert wird. Die Aufgabestellen 3 liegen bevorzugt etwa 100 mm oberhalb eines Anströmbodens 6, der von unterhalb mit Wirbelgas beaufschlagt wird ; typischerweise werden z. B. 4 und mehr Aufgabestellen in gleichmäßiger Verteilung über die Längsseite von Wirbelschichtofen 5 vorgesehen.

Nach der Trocknung in der Sandwirbelschicht gelangt das zu behandelnde Material, zusammen mit dem von der Wirbelschicht abgeführten Wirbelgas, über Leitung 7 in einen Feststoffabscheider 8, in welchem der Feststoff möglichst vollständig vom Wirbelgasstrom abgetrennt wird. Der Feststoff gelangt über Leitung 9 in eine Dosiervorrichtung 10, welche ihn über eine oder mehrere Aufgabestellen 11 in den weiteren Wirbelschichtofen 12 befördert. In Fig. 1 ist jeweils nur eine Aufgabestelle 3 bzw. 11 zu erkennen, da es sich um Vertikalschnitte durch die beiden Wirbelschichtöfen handelt. — Der weitere Wirbelschichtofen 12 kann rund oder eckig ausgeführt sein ; auch in ihm wird eine etwa 600 bis 700 mm hohe weitere Wirbelschicht 13 (z. B. aus Sand) betrieben und etwa 100 mm oberhalb des von unten mit Wirbelgas beaufschlagten Anströmbodens 14 sind die Aufgabestellen 11 angeordnet.

In dem — weiteren — Wirbelschichtofen 12 wird durch geeignete Temperatur- und Wirbelgasauswahl das Adsorptionsmittel regeneriert, d. h. daß im Falle einer pulverförmigen Aktivkohle als Adsorptionsmittel eine Wassergasreaktion unter Ausschluß von Sauerstoff stattfindet und das im Falle einer Vermischung mit dem Schlamm einer Kläranlage (Biomasse) letztere ganz oder teilweise vergast wird. Die von der Aktivkohle freiwerdenden Beladungssubstanzen können dabei ebenfalls vergast werden.

Die vorerwähnte Biomasse kann aber auch, wie bereits erläutert, zwischen der Trocknungs- und der Regenerationsstufe von dem Adsorptionsmittel abgetrennt werden, und zwar sowohl vor als auch hinter dem Feststoffabscheider 8 — dies ist in Fig. 1 nicht gesondert dargestellt.

. Während der Regeneration wird das Adsorptionsmittel durch die Wirbelschicht 13 nach oben gefördert und gelangt, zusammen mit dem Wirbelgas, über Leitung 15 in einen Feststoffabscheider 16 ; der dort abgeschiedene Feststoff entspricht in seiner Qualität und seinen Eigenschaften fast genau wieder dem ursprünglichen, pulverförmigen Adsorptionsmittel vor seiner Beladung. Die im wesentlichen feststofffreien Gase aus dem Feststoffabscheider 16 gelangen durch Leitung 17 und über einen Druckregler 17a in der Regel vollständig wieder zurück in den Prozeß, in dem sie mit einem Teil der aus dem Feststoffabscheider 8 kommenden Gase durch Leitung 18 über einen Druckregler 19 und weiter durch Leitung 20 als Mischgas für die Einstellung der erforderlichen Wirbelgastemperaturen und -mengen wieder verwendet werden. Sie gelangen über ein Saugzuggebläse 21 a und über Leitung 22 zurück in den Prozeß. Die restlichen Gase gelangen mittels eines Sauggebläses 21 in einen Wärmetauscher 28 zur Vorwärmung von Verbrennungsluft und werden über einen Druckregler 19a durch Leitung 33 der Atmosphäre zugeführt. Bei der Wirbelgas-Bereitstellung wird über Leitung 23 ein z. B. flüssiger, gasförmiger oder fester Brennstoff der Brennkammer 23a zugeführt, wo er zusammen mit der ggf. vorgewärmten Verbrennungsluft aus Leitung 24 reagiert ; hierzu wird die Luft in der Regel zunächst über einen Filter 24a und ein Gebläse 24b sowie einen Wärmetauscher 28 geleitet.

Bereits in der Gasmischkammer unterhalb des Anströmbodens 6 des Wirbelschichtofens 4 sind Mischkammern 29, 30, 31 angeordnet. In der Mischkammer 29 wird das heiße Verbrennungsgas mit rückgeführtem Wirbelgas vermischt, welches aus Leitung 22 abgezweigt und durch den Druckregler 32 und Leitung 25 in die Mischkammer 29 gelangt. Aus einer der Mischkammer 29 nachgeschalteten Mischkammer 30 kann ein Teilstrom der heißen Gase über Leitung 27 abgezweigt werden, um über den Druckregler 32b als Wirbelgas in den Wirbelschichtofen 12 zu gelangen. Der andere Teilstrom aus Mischkammer 30 gelangt in die weitere Mischkammer 31, um dort mittels des übrigen Gases aus Leitung 22 weiter abgekühlt zu werden und dann als Wirbelgas durch den Anströmboden 6 in die Wirbelschicht 5 zu gelangen ; hierzu wird aus Leitung 22 über Druckregler 32a und Leitung 26 ein entsprechender Gasstrom der Mischkammer 31 zugeführt.

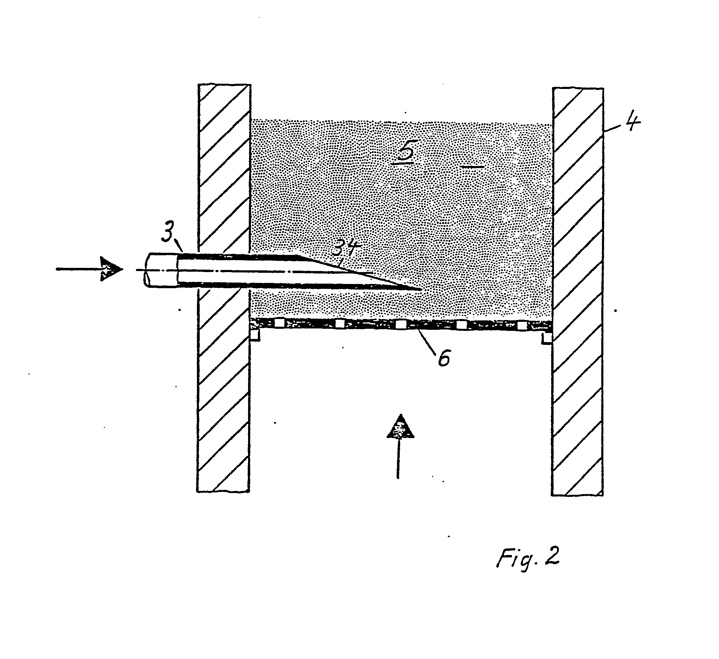

In Fig. 2 erkennt man am Beispiel des Wirbelschichtofens 4, wie die Aufgabestellen ausgebildet sein können. Hier ist die Aufgabestelle 3 als rohrförmige Lanze ausgebildet ; sie ragt mit ihrem freien, schräg nach oben angeschnittenen Ende 34 in die Wirbelschicht 5 hinein. Solche Aufgabelanzen sind vorzugsweise gestaffelt quer zur Bildebene angeordnet, wobei die in Fig. 2 dargestellte Ansichtsseite die Schmalseite des Wirbelschichtofens 4 darstellt.

Beispiel

Für das erfindungsgemäße Verfahren wurde für die Trocknungsstufe ein als Wirbelrinne ausgebildeter Wirbelschichtofen mit einer Grundfläche von 0,16 m² bei einem Seitenverhältnis von 4 : 1 verwendet. Der Wirbelschichtofen war mit Sand 500 mm hoch gefüllt (im Ruhezustand) und die mittlere Sandkörnung betrug im Durchmesser 1 bis 2 mm. Als Wirbelgas wurde ein Gemisch aus stöchiometrisch verbranntem Erdgas und rückgeführtem Abgas mit einer Temperatur von 670 °C und einem Mengestrom von ca. 420 $m_n^3$/h eingesetzt. Das zu behandelnde Gut war eine mit Schlamm in gleichen Gewichtsverhältnissen vermischte Aktivkohle. Diese pulverförmige Aktivkohle hat eine Körnung von 90 % < 40 µm und ein mittleres Schüttgewicht von ca. 400 g/l. Von dieser Aktivkohle wurden im Mittel 10 g/m³ Abwasser in das Belebtschlammbekken einer biologischen Abwaserreinigungsanlage in einem Chemiebetrieb zugegeben.

Der gesamte Feststoff lag als wäßriger Schlamm mit einem Trockensubstanzgehalt von 25 % vor ; von diesem Schlamm wurden dem Wirbelschichtofen 100 l/h in kontinuierlicher Beaufschlagung zugeführt.

Das aus der Wirbelschicht abgeführte Wirbelgas und der getrocknete Feststoff hatten in 1 000 mm Höhe oberhalb des Anströmbodens eine Temperatur von 180 °C.

In einem dem Wirbelschichtofen nachgeschalteten Zyklon, Ø 500 mm, Gesamthöhe 1 400 mm, wurde der Feststoff zu ca. 93 % aus dem Gasstrom abgeschieden und mit Hilfe einer Dosiervorrichtung der Regenerationsstufe zugeführt. Die Dosiervorrichtung bestand aus einer Dosier- und einer Förderschnecke, wobei die erstere gasdicht über dem Einlauftrog der Förderschnecke montiert war. Die Regenerationsstufe bestand aus einem runden, stehenden Wirbelschichtofen mit einer lichten Weite von 200 mm und einem Anströmboden mit einem Querschnitt von 0,031 m². Die Füllung des Wirbelschichtofens bestand wieder aus einer 500 mm hohen Sandschicht (im Ruhezustand) mit der gleichen Körnung, wie in der Trocknungsstufe. Die Wirbelgastemperatur unterhalb des Anströmbodens betrug 1 020 °C. In diesen Wirbelschichtofen wurden mit oben erwähnter Förderschnecke 25 kg Trockensubstanz/h aus der Trocknungsstufe eingefüllt und regeneriert. Hierbei handelte es sich um eine Reaktivierung, bei der das Wirbelgas nachfolgende Zusammensetzung aufwies : $N_2$ = 66 Vol.-%, $CO_2$ = 6 Vol.-%, $H_2O$ = 28 Vol.-%. Unter diesen Bedingungen wurde die Regenerationen durchgeführt, wobei die Beladungssubstanz auf der Aktivkohle und ein Teil der Biomasse vergast wurden. Der verbleibende Teil an Biomasse fiel als Kohlenstoff und Asche an.

Das erhaltene Reaktivat wurde wieder im gleichen Reinigungsprozeß eingesetzt, hierbei wurden bezüglich des Adsorptionsvermögens und der Standzeit keine Verschlechterung der Eigenschaften gegenüber neuem Aktivkohlepulver festgestellt.

Zum Vergleich wurde frische, noch nicht eingesetzte Aktivkohle sowie regenerierte Aktivkohle in Asche umgewandelt ; hierbei ergab sich bei der frischen Aktivkohle ein Aschegehalt von 9,8 und bei der regenerierten von 11 %. Dieser geringfügige Anstieg des Ascheanteils ist, im Hinblick auf den vergleichsweise hohen Anteil an Biomasse, die in dem Prozeß getrocknet und vergast wurde, überraschend und zeigt, daß es ohne weiteres möglich ist, mit dem erfindungsgemäßen Verfahren eine zufriedenstellende Regeneration pulverförmiger Aktivkohle zu erreichen.

**Patentansprüche**

1. Verfahren zur Regeneration von feuchten, pulverförmigen Adsorptionsmitteln, wobei das feuchte, beladene Adsorptionsmittel in den unteren Bereich einer mit einem Auflockerungs/Wärmeträger-Schüttgut (Schüttgut) versehenen Wirbelschicht eingespeist, unter gleichzeitiger Trocknung durch das Schüttgut hindurch nach oben gefördert (Trocknungsstufe) und gemeinsam mit dem Wirbelgas von oberhalb der Wirbelschicht abgeführt und in einem nachgeschalteten Feststoffabscheider vom Wirbelgas getrennt wird, dadurch gekennzeichnet, daß das Adsorptionsmittel in eine mit einem weiteren Auflockerungs/Wärmeträger-Schüttgut (Schüttgut) versehene weitere Wirbelschicht (Regenerationsstufe) eingespeist, darin unter gleichzeitiger Regeneration durch das weitere Schüttgut hindurch nach oben gefördert und gemeinsam mit dem weiteren Wirbelgas von oberhalb der Wirbelschicht abgeführt und in einem nachgeschalteten weiteren Feststoffabscheider vom weiteren Wirbelgas getrennt wird.

2. Verfahren nach Anspruch 1, dadurch gekennzeichnet, daß die abgeführten Wirbelgase zumindest teilweise den frischen Wirbelgasen zugemischt werden.

3. Verfahren nach Anspruch 1 oder 2, dadurch gekennzeichnet, daß mit dem feuchten, beladenen Adsorptionsmittel vermischter Schlamm zusammen mit dem Adsorptionsmittel getrocknet und vor dem Regenerationsschritt von diesem in an sich bekannter Weise abgetrennt wird.

4. Verfahren nach Anspruch 1 oder 2, dadurch gekennzeichnet, daß mit dem feuchten, beladenen Adsorptionsmittel vermischter Schlamm zusammen mit dem Adsorptionsmittel getrocknet und in der Regenerationsstufe zumindest teilweise vergast wird.

5. Verfahren nach einem oder mehreren der Ansprüche 1 bis 4, dadurch gekennzeichnet, daß in der Regenerationsstufe vom Adsorptionsmittel freiwerdende Beladungssubstanz dort zumindest teilweise vergast wird.

6. Verfahren nach einem oder mehreren der Ansprüche 1 bis 5, dadurch gekennzeichnet, daß als Adsorptionsmittel Aktivkohle verwendet wird.

7. Verfahren nach einem oder mehreren der Ansprüche 1 bis 6, dadurch gekennzeichnet, daß das Adsorptionsmittel im Kreislauf in einer Kläranlage eingesetzt wird.

8. Vorrichtung zum Durchführen des Verfahrens nach Anspruch 1, gekennzeichnet durch

a) einen an sich bekannten, länglichen, von unten angeströmten Wirbelschichtofen (4) mit auf seine Längsausdehnung verteilten mehreren Aufgabestellen (3) für feuchtes, beladenes Adsorptionsmittel,

b) einen weiteren Wirbelschichtofen (12) mit einer oder mehreren Aufgabestellen (11) für getrocknetes, zu regenerierendes Adsorptionsmittel sowie

c) den Wirbelschichtöfen (4, 12) nachgeschalteten Feststoffabscheidern (8, 16) mit gemeinsamer Zuführleitung (7, 15) für Wirbelgas und Adsorptionsmittel.

9. Vorrichtung nach Anspruch 8, gekennzeichnet durch seitlich in die Wirbelschichtöfen (4, 12) eingeführte Aufgabelanzen.

10. Vorrichtung nach Anspruch 8 oder 9, gekennzeichnet durch eine Höhe der Aufgabestellen (3, 11) über den Anströmböden (6, 14) von etwa 1/20 bis 1/5 der Wirbelschichthöhe.

11. Vorrichtung nach einem oder mehreren der Ansprüche 8 bis 10, gekennzeichnet durch als Rost ausgebildete Anströmböden (6, 14).

12. Vorrichtung nach einem oder mehreren der Ansprüche 8 bis 11, gekennzeichnet durch eine Gasmischkammer (29, 30, 31) unterhalb des Anströmbodens (6).

**Claims**

1. Process for the regeneration of humid, powdered adsorbants in which the humid, loaded adsorbant is fed into the lower section of a fluidized bed provided with a loosening/heat transfering bulk material (bulk material) which is simultaneously transported upwards through the bulk material and dried (drying step) and discharged together with the vortex gas from a point above the fluidized bed and separated from the vortex gas in an upstream solid separator, characterized by the fact that the adsorbant is fed into another fluidized bed (regeneration step) provided with another loosening/heat transfering bulk material (bulk material), simultaneously transported upwards through this bulk material and regenerated and discharged together with another vortex gas from a point above the fluidized bed and separated from the second vortex gas in another upstream solid separator.

2. Process described in claim 1, characterized by the fact that at least a part of the discharged vortex gases is mixed with the fresh vortex gases.

3. Process described in claim 1 or 2, characterized by the fact that a slurry mixed with the humid, loaded adsorbant is dried together with the adsorbant and is separated from the adsorbant using a state of the art process before reaching the regeneration step.

4. Process described in claim 1 or 2, characterized by the fact that a slurry mixed with the humid, loaded adsorbant is dried together with the adsorbant and is at least partially gasified during the regeneration step.

5. Process described in one or several of the claims 1 to 4, characterized by the fact that the load substance released from the adsorbant during the regeneration step is at least partially gasified during this step.

6. Process described in one or several of the claims 1 to 4, characterized by the fact that activated carbon is used as adsorbant.

7. Process described in one or several of the claims 1 to 6, characterized by the fact that the adsorbant is used in a water purification plant circuit.

8. Installation to carry out the process described in claim 1, characterized by

a) a state of the art longitudinal-shaped fluidized bed combustor with a gas flow entering from below (4) and several inputs (3) for humid, loaded adsorbants distributed on its longitudinal extension,

b) another fluidized bed combustor (12) with one or several inputs (11) for a dried adsorbant which has to be regenerated and

c) solid separators (8, 16) behind the fluidized bed combustors (4, 12) with a joint feed line (7, 15) for vortex gas and adsorbants.

9. Installation described in claim 8, characterized by feed lances led into the sides of the fluidized bed combustors (4, 12).

10. Installation described in claim 8 or 9, characterized by a height of the inputs (3, 11) above the distributor plates (6, 14) of approx. 1/20 to 1/5 of the fluidized bed height.

11. Installation described in one or several of the claims 8 to 10, characterized by the fact that a grate is used as distributor plate.

12. Installation described in one or several of the claims 8 to 11, characterized by a gas mixing chamber (29, 30, 31) below the distributor plate (6).

## Revendications

1. Procédé pour la régénération d'adsorbants pulvérulents humides, dans lequel l'adsorbant chargé humide est introduit dans la partie inférieure d'un lit fluidisé d'un matériau particulaire en vrac, servant de matériau d'entraînement et de milieu caloporteur, transporté par le matériau en vrac vers le haut avec séchage concomitant (stade de séchage), puis soutiré avec le gaz de fluidification au-dessus du niveau du lit fluidisé et séparé dans un séparateur des matières solides disposé en aval du gaz de fluidification, caractérisé en ce que l'adsorbant est amené dans un deuxième lit fluidisé constitué aussi d'une matière particulaire en vrac, servant de matériau d'entraînement et de milieu caloporteur (stade de régénération), transporté à travers le matériau en vrac, avec régénération concomitante, vers le haut, puis soutiré avec le gaz de fluidification au-dessus du niveau du lit fluidisé et séparé de ce gaz de fluidification dans un deuxième séparateur des matières solides, disposé en aval.

2. Procédé suivant la revendication 1, caractérisé en ce qu'une fraction au moins des gaz de fluidification soutirés est mélangée aux gaz de fluidification frais.

3. Procédé suivant la revendication 1 ou la revendication 2, caractérisé en ce que l'on mélange à l'adsorbant chargé humide de la boue, qui est séchée avec celui-ci, puis séparée de celui-ci par une technique connue avant la phase de régénération.

4. Procédé suivant la revendication 1 ou la revendication 2, caractérisé en ce que la boue, mélangée à l'adsorbant chargé humide, est séchée avec celui-ci, puis gazéifiée au moins partiellement dans la phase de régénération.

5. Procédé suivant l'une ou plusieurs des revendications 1 à 4, caractérisé en ce que la substance, avec laquelle l'adsorbant est chargé et qui est dégagée dans le stade de régénération, y est au moins partiellement gazéifiée.

6. Procédé suivant l'une ou plusieurs des revendications 1 à 5, caractérisé en ce que l'adsorbant utilisé est du charbon actif.

7. Procédé suivant l'une ou plusieurs des revendications 1 à 6, caractérisé en ce que l'adsorbant circule en circuit fermé dans une installation d'épuration des eaux.

8. Installation pour la réalisation du procédé suivant la revendication 1, caractérisée en ce qu'elle est composée :

a) d'un four à lit fluidisé (4) oblong, connu en soi, alimenté par le bas et comportant une série de points d'introduction (3) d'adsorbant chargé humide, répartis sur toute sa longueur,

b) d'un deuxième four à lit fluidisé (12) avec un ou plusieurs points d'introduction (11) d'adsorbant sec à régénérer et

c) de séparateurs des matières solides (8, 16), disposés en aval des fours à lit fluidisé (4, 12) et connectés à une conduite commune (7, 15) pour l'amenée du gaz de fluidification et de l'adsorbant.

9. Installation suivant la revendication 8, caractérisée en ce que les fours à lit fluidisé (4, 12) sont pourvus de lances d'injection latérales.

10. Installation suivant la revendication 8 ou la revendication 9, caractérisée en ce que les points d'introduction (3, 11) se situent à une hauteur au-dessus des plaques d'admission (6, 14) comprise entre environ un 20e et un 5e de la hauteur du lit fluidisé.

11. Installation suivant l'une ou plusieurs des revendications 8 à 10, caractérisée en ce que les plaques d'admission (6, 14) sont des grilles.

12. Installation suivant l'une ou plusieurs des revendications 8 à 11, caractérisée en ce qu'une chambre de mélange des gaz (29, 30, 31) est prévue sous la plaque d'admission (6).

Fig. 1

Fig. 2